# FASCICULE DE BREVET EUROPEEN

(11) **EP 0 727 675 B1**
(45) Date de publication et mention de la délivrance du brevet: **06.12.2000**
(21) Numéro de dépôt: 96400249.7
(22) Date de dépôt: 06.02.1996
(51) Int. Cl.: G01S 7/34, G01S 13/76

(54) **Ensemble interrogateur pour système d'identification par radiodétection**
Abfragegerät für ein Identifizierungssystem mittels Radiodetektion
Interrogator for a identification system by radiodetection

(30) Priorité: 14.02.1995 FR 9501658
(43) Date de publication de la demande: 21.08.1996
(73) Titulaire: THOMSON-CSF, 75008 Paris (FR)
(72) Inventeur: Chevalier, Jean-Pierre, Thomson-CSF, F-92402 Courbevoie Cedex (FR); Quemin, Patrick, Thomson-CSF, F-92402 Courbevoie Cedex (FR)
(74) Mandataire: Courtellemont, Alain

(56) Documents cités:
- WO-A-92/00531
- US-A- 5 311 184

## Description

La présente invention concerne le domaine de la reconnaissance d'un objectif au moyen d'un système d'identification par radiodétection, bien connu sous le nom de système IFF, ces trois lettres étant le sigle du groupe de mots anglo-saxons "Identification Friend or Foe" qui signifie "identification ami ou ennemi". Dans ce qui suit et dans les revendications le sigle IFF sera utilisé sans revenir sur sa signification.

Il est connu, après avoir repéré un objectif par un premier système, généralement un radar, d'envoyer dans la direction de cet objectif un signal fait d'au moins une paire d'impulsions, dont l'écart dans le temps correspond à une question posée à l'objectif, par exemple concernant son identité. Si l'objectif est équipé d'un dispositif approprié, il répond en envoyant un message fait de zéros et de uns régulièrement répartis, transmis sous forme d'impulsions avec deux impulsions d'encadrement et une impulsion centrale.

Il est connu de réaliser l'ensemble interrogateur en utilisant une antenne mécanique directive mais les signaux dus, en particulier, aux lobes secondaires de l'antenne ou à des réflexions multiples, perturbent la réception du signal utile de réponse. Pour lutter contre les perturbations différentes mesures sont proposées : écoute des réponses éventuelles pendant un temps limité dit "fenêtre de réponse", lié à la portée de l'écoute, ouélimination des signaux perturbateurs par traitement GVT et/ou RSLS.

GVT est le sigle correspondant à Gain Variable dans le Temps ; dans la littérature anglo-saxonne il se traduit par GTC ou "Gain Time Control". Le traitement GVT consiste à adapter la sensibilité du récepteur à la distance de l'objectif de façon à réduire les effets nuisibles d'une sensibilité inutilement élevée ; pour cela le gain du récepteur est réduit au début de la fenêtre de réponse, c'est-à-dire pour des distances d'objectifs inférieures à la portée maximale et, en général, la réduction maximale de gain est appliquée pour des distances de 3 à 5 km correspondant aux 20 à 33 premières microsecondes d'une fenêtre de réponse, puis la sensibilité est augmentée progressivement en fonction de la distance jusqu'à atteindre la sensibilité maximale pour de 25% à 100% de la portée maximale.

RSLS est un sigle de la littérature anglo-saxonne correspondant à Reception Side Lobe Suppression qui peut se traduire en français par suppression des lobes secondaires à la réception. Le traitement RSLS consiste à comparer l'amplitude des signaux des voies somme, Σ, et différence, Δ, fournies par deux récepteurs identiques mais associés respectivement à une antenne directive et à une antenne omnidirectionnelle ; un signal de la voie Σ n'est pris en compte que si la valeur de son amplitude est au moins égale à la somme de la valeur de l'amplitude du signal correspondant dans la voie Δ et d'une valeur prédéterminée.

Les traitements GVT et RSLS, tels qu'ils sont mis en oeuvre avec les antennes à balayage mécanique, donnent satisfaction mais ne peuvent être mis en oeuvre avec les antennes à balayage électronique car ils nécessitent que les diagrammes d'antenne restent constants quel que soit l'angle de pointage de l'antenne or tel n'est pas le cas avec les antennes à balayage électronique ; malgré tout il est très souhaitable de pouvoir employer des antennes à balayage électronique du fait que ces antennes sont fixes et peu encombrantes et d'adapter les traitements GVT et RSLS en conséquence.

La présente invention a pour but de proposer des ensembles interrogateurs équipés d'antennes à balayage électronique et auxquels sont appliqués des traitements de type GVT et/ou RSLS spécialement conçus en fonction de ce type d'antennes.

Ceci est obtenu, en particulier, par une adaptation du traitement considéré au pointage de l'antenne.

Selon l'invention il est proposé un ensemble interrogateur pour système d'identification par radiodétection avec, en réception, un dispositif pour capter des ondes hertziennes, ce dispositif étant susceptible d'être pointé suivant divers angles et étant destiné à fournir un signal qui sera dit de voie Σ, un circuit de discrimination d'impulsions, du type à gain variable en fonction du temps, comportant des moyens de comparaison ayant une première entrée couplée au dispositif, une deuxième entrée et une sortie, et un générateur de signaux pour fournir un signal de référence, d'amplitude variable avec le temps, sur la deuxième entrée des moyens de comparaison, caractérisé en ce que le dispositif comporte une antenne à balayage électronique et en ce que le générateur comporte des moyens de mise en mémoire de plusieurs courbes de variation du signal de référence en fonction du temps, afin que le générateur puisse fournir, comme signal de référence, un signal correspondant, au choix, à l'une de ces courbes et des moyens de sélection d'une des courbes en fonction de l'angle de pointage du dispositif.

Selon l'invention il est également proposé un ensemble interrogateur pour système d'identification par radiodétection avec, en réception, un dispositif pour capter des ondes hertziennes, ce dispositif étant susceptible d'être pointé suivant divers angles et étant destiné à fournir deux signaux distincts qui seront dits de voies Σ et voie Δ, et un circuit de suppression des lobes secondaires comportant un générateur de niveaux pour fournir un signal de niveau donné et des moyens de comparaison pour recevoir les signaux de voie Σ et de voie Δ et le signal de niveau donné et délivrer un signal de sortie si et seulement si l'amplitude du signal de la voie Σ est au moins égale à celle du signal de la voie Δ augmentée de l'amplitude du signal de niveau donné, caractérisé en ce que le dispositif comporte une antenne à balayage électronique, en ce que le générateur comporte des moyens de mise en mémoire de plusieurs valeurs afin que le générateur puisse fournir, comme signal de niveau donné, un signal correspondant, au choix, à l'une de ces valeurs mises en mémoire et des moyens de sélection d'une des valeurs mises en mémoire en fonction de l'angle de pointage du dispositif.

Selon l'invention il est également proposé un ensemble interrogateur pour système d'identification par radiodétection avec, en réception, un dispositif pour capter des ondes hertziennes, ce dispositif étant susceptible d'être pointé suivant divers angles et étant destiné à fournir deux signaux distincts qui seront dits de voies Σ et voie Δ, un circuit de discrimination d'impulsions , du type à gain variable en fonction du temps, comportant des premiers moyens de comparaison ayant une première entrée couplée au dispositif, une deuxième entrée et une sortie, et un générateur de signaux pour fournir un signal de référence, d'amplitude variable avec le temps, sur la deuxième entrée des premiers moyens de comparaison et un circuit de suppression des lobes secondaires comportant un générateur de niveaux pour fournir un signal de niveau donné et des seconds moyens de comparaison pour recevoir les signaux de voie Σ et de voie Δ et le signal de niveau donné et délivrer un signal de sortie si et seulement si l'amplitude du signal de la voie Σ est au moins égale à celle du signal de la voie Δ augmentée de l'amplitude du signal de niveau donné, caractérisé en ce que le dispositif comporte une antenne à balayage électronique, en ce que le générateur de signaux comporte des moyens de mise en mémoire de plusieurs courbes de variation du signal de référence en fonction du temps, afin de pouvoir fournir, comme signal de référence, un signal correspondant, au choix, à l'une de ces courbes et des premiers moyens de sélection d'une des courbes en fonction de l'angle de pointage du dispositif et en ce que le générateur de niveaux comporte des moyens de mise en mémoire de plusieurs valeurs afin de pouvoir fournir, comme signal de niveau donné, un signal correspondant, au choix, à l'une de ces valeurs mises en mémoire et des moyens de sélection d'une des valeurs mises en mémoire en fonction de l'angle de pointage du dispositif.

La présente invention sera mieux comprise et d'autres caractéristiques apparaîtront à l'aide de la description ci-après et des figures s'y rapportant qui représentent :
- la figure 1, une antenne à balayage mécanique,
- la figure 2, une antenne à balayage électronique,
- les figures 3 et 5 des diagrammes relatifs à des traitements de signaux selon l'invention,
- les figures 4 et 6 des circuits de traitement de signaux selon l'invention.

Sur les différentes figures les éléments correspondant sont désignés par les mêmes symboles.

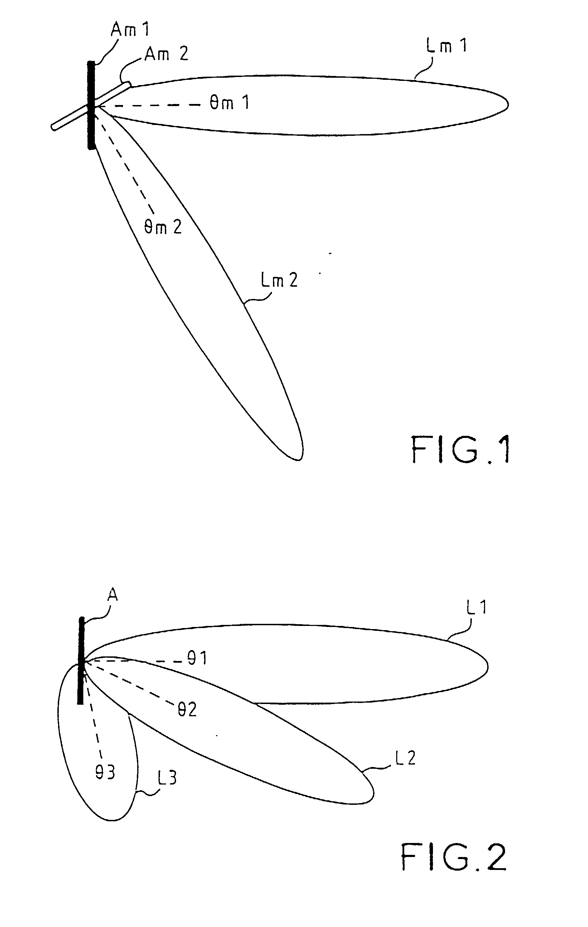

La figure 1 représente une antenne directive à balayage mécanique dans deux positions de pointage différentes : une position Am1 correspondant à un angle de pointage θm1 et à un lobe principal Lm1 et une position Am2 correspondant à un angle de pointage θm2 et à un lobe principal Lm2. Une telle antenne a des caractéristiques identiques quel que soit l'angle de pointage, comme il ressort en particulier de la représentation des lobes Lm1 et Lm2.

La figure 2 représente une antenne, A, à commutation d'éléments, utilisée en balayage électronique. Sur cette figure le lobe principal correspondant à la voie Σ obtenue à l'aide de l'antenne A, a été représenté pour trois angles de pointage différents: lobes L1, L2, L3 correspondant respectivement à des angles de pointage θ1, θ2, θ3. Comme il ressort de la représentation des lobes L1, L2, L3, l'antenne A a des caractéristiques qui sont fonction de l'angle de pointage et cela est valable également en ce qui concerne tout le diagramme de rayonnement correspondant à la voie Σ et tout le diagramme de rayonnement correspondant à la voie Δ ; il est rappelé que les diagrammes Σ et Δ sont obtenus simultanément à partir d'une même antenne à commutation électronique, par des combinaisons de signaux fournis par les éléments rayonnants constitutifs de l'antenne.

Pour tenir compte de cette variation des caractéristiques de l'antenne il est proposé de réaliser des traitements GVT et/ou RSLS spécifiques pour chaque valeur ou, au moins, pour plusieurs groupes de valeurs de l'angle de pointage.

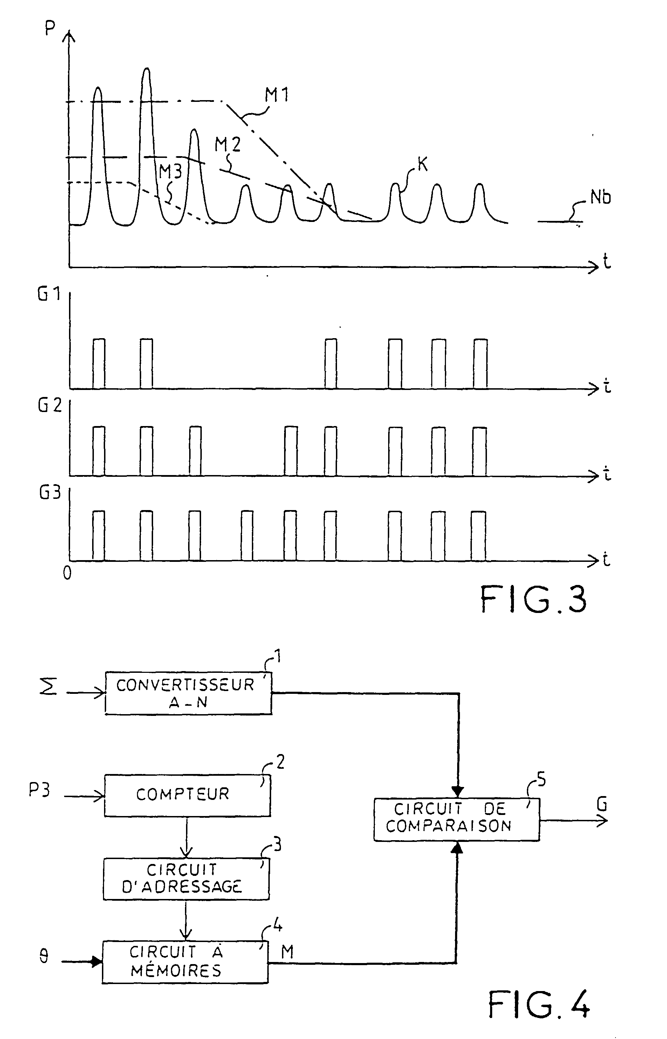

Les figures 3 et 4 illustrent une façon d'effectuer le traitement GVT dans un ensemble interrogateur IFF utilisant une antenne à commutation électronique pour effectuer un balayage électronique.

La figure 3 est un ensemble de quatre diagrammes en fonction du temps. Sur le diagramme supérieur est représentée en trait plein, l'évolution de la puissance P d'un signal, K, qui apparaît sur la voie Σ associée à l'antenne à commutation A de la figure 2 ; pour la simplification du dessin le signal K qui est reçu sur la voie Σ est supposé avoir la même forme pour chacun des trois angles de pointage θ1, θ2, θ3 selon la figure 2, il n'est donc dessiné qu'une seule fois.

Le traitement GVT du signal K consiste, comme avec une antenne à balayage mécanique, à déterminer une courbe de seuil en fonction du temps écoulé dans la fenêtre de recherche et à ne prendre en compte que les portions du signal K dont l'amplitude est supérieure à cette courbe ; dans l'exemple décrit le début de la fenêtre de recherche, correspondant au temps t=0 sur la figure 3, est déterminé par le front arrière de la dernière impulsion du signal d'interrogation. Mais ici plusieurs courbes de seuil sont déterminées chacune pour un angle de pointage différent de l'antenne à balayage électronique : courbes M1, M2, M3 respectivement pour les angles θ1, θ2, θ3 tels qu'indiqués sur la figure 2.

Les courbes de seuil M1, M2, M3 sont déterminées de la même manière que pour une antenne à balayage mécanique, c'est-à-dire que la sensibilité du récepteur est adaptée à la distance de l'objectif de façon à réduire fortement et d'une valeur constante le gain du récepteur au début de la fenêtre de réponse pendant une durée correspondant en général à des réponses d'objectifs situés à de l'ordre de 3 à 5 km ; puis la sensibilité est augmentée progressivement en fonction de la distance jusqu'à atteindre la sensibilité maximale pour de 25% à 100% de la portée maximale ; cette sensibilité maximale correspond au niveau maximal, Nb, de bruit dans le récepteur.

En fonction de ces trois courbes de seuil le traitement GVT du signal K selon la figure 3 ne fait pas apparaître la même quantité d'information valable. Ceci est normal car il ne faut pas oublier que c'est pour simplifier le dessin qu'une seule et même forme de signal, K, a été représentée mais qu'en fait il faut considérer que le signal K est successivement l'un de trois signaux reçus respectivement avec des angles de pointage θ1, θ2, θ3 et que ces trois signaux sont distincts dans le temps, proviennent de directions distinctes et sont donc totalement distincts les uns des autres.

Les informations considérées comme valables par le traitement GVT sont représentées sur trois diagrammes du bas de la figure 3 : diagrammes G1, G2, G3 respectivement pour les angles de pointages θ1, θ2, θ3 selon la figure 2. Bien entendu l'axe des temps de chacun des diagrammes G1, G2, G3 correspond, dans une translation verticale, à l'axe des temps du diagramme sur lequel est représenté le signal K ; ceci permet de remarquer, en particulier, que, à la troisième impulsion des diagrammes G2, G3 ne correspond pas d'impulsion dans le diagramme G1 car, à cet instant, le signal K augmente en puissance pour passer au dessus des courbes de seuil M2 et M3 mais sans atteindre la courbe de seuil M1.

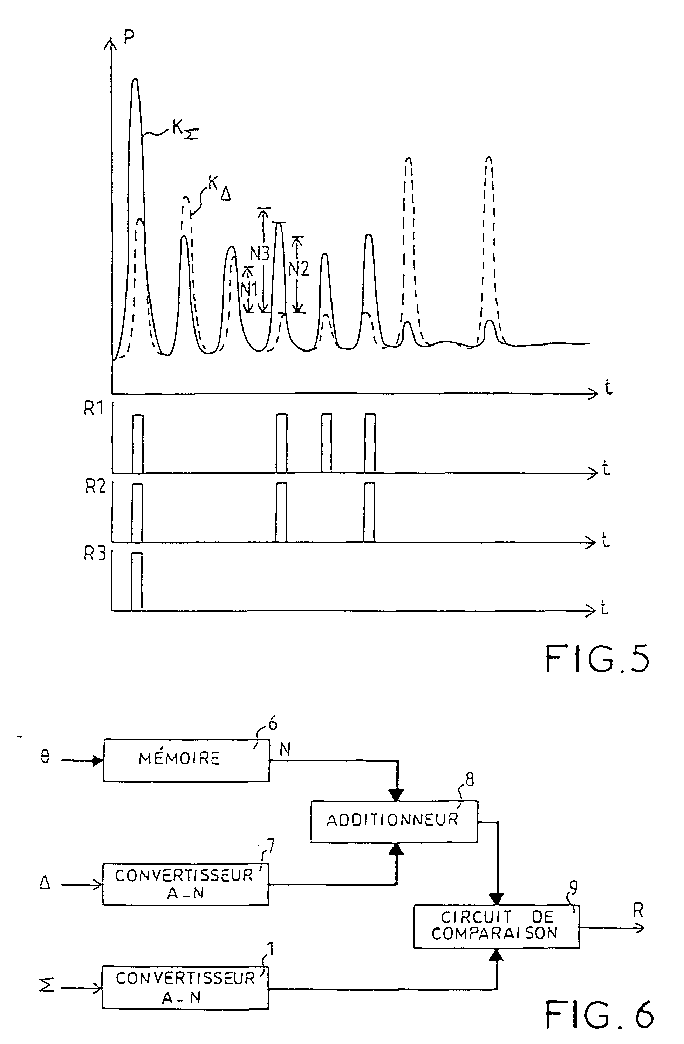

Le schéma d'un exemple de réalisation d'un circuit de discrimination d'impulsions, de type GVT, est donné sur la figure 4. Sur ce schéma comme d'ailleurs sur celui de la figure 6, les dispositifs de synchronisation précise, relevant de la technologie courante, n'ont pas été représentés en vue de rendre les dessins plus clairs et de simplifier l'exposé.

Après que des courbes de seuil telles que les courbes M1, M2, M3 de la figure 3 aient été déterminées pour différents angles de pointage, leurs valeurs sont stockées dans un circuit à mémoires, 4.

Quand un signal d'interrogation est émis par l'ensemble interrogateur comportant le circuit selon la figure 4, la fin de ce signal d'interrogation, repérée par le front arrière d'une impulsion généralement appelée P3 dans la littérature technique, détermine le début d'une fenêtre de recherche en déclenchant un compteur 2 dont la durée de comptage est égale à la durée de la fenêtre de recherche. En même temps qu'est déclenché le compteur 2, un signal du genre du signal K de la figure 3 apparaît sur la voie Σ du récepteur de l'ensemble interrogateur ; c'est dans ce signal que va être recherchée la réponse au signal d'interrogation qui vient d'être émis, c'est-à-dire que vont être recherchées les informations valables selon les critères d'un traitement GVT. A cette fin le signal de la voie Σ est converti en valeurs numériques ; ces valeurs numériques sont comparées, dans un circuit de comparaison 5, avec les valeurs numériques de celle des courbes de seuil correspondant à l'angle de pointage de l'antenne, au moment de l'interrogation pour laquelle est attendue une réponse. La sélection, parmi les mémoires du circuit 4 de celle correspondant à l'angle θ de pointage de l'antenne est effectuée par un signal représentatif de la valeur θ appliqué sur une entrée de sélection du circuit 4. La mémoire sélectionnée est lue par un circuit d'adressage 3 dont l'avance est réglée par le compteur 2.

Ainsi réalisé le circuit de discrimination d'impulsions selon la figure 4 fournit sur la sortie du circuit de comparaison 5 des impulsions G du type de celles qui sont représentées sur les diagrammes G1, G2 et G3 de la figure 3.

Les figures 5 et 6 illustrent une façon d'effectuer le traitement RSLS dans un ensemble interrogateur IFF utilisant une antenne à commutation électronique pour effectuer un balayage électronique.

La figure 5 est un ensemble de quatre diagrammes en fonction du temps. Sur la diagramme supérieur est représentée, en trait plein, l'évolution de la puissance P d'un signal K_{Σ} qui apparaît sur la voie Σ associée à l'antenne à commutation A de la figure 2 ;comme sur la figure 3, pour la simplification du dessin le signal reçu sur la voie Σ est supposé avoir la même forme pour chacun des trois angles de pointage θ1, θ2, θ3 selon la figure 2 et n'est dessiné qu'une seule fois. Sur le diagramme supérieur est également dessinée, mais en trait interrompu, l'évolution de la puissance P d'un signal K_{Δ} qui apparaît sur la voie Δ associée à l'antenne A en même temps que le signal K_{Σ} apparaît sur la voie Σ ; là encore un seul signal est dessiné et sera successivement considéré comme ayant été obtenu avec les angles de pointage θ1, θ2, θ3 selon la figure 2.

Le traitement RSLS des signaux K_{Σ} et K_{Δ} consiste, comme avec une antenne à balayage mécanique, à déterminer un niveau de comparaison et à ne prendre en compte, dans la fenêtre de recherche, que les portions du signal K_{Σ} dont l'amplitude est supérieure aux portions correspondantes du signal K_{Δ} majorée de la valeur du niveau de comparaison. Mais ici un niveau de comparaison est déterminé pour chaque angle de pointage : niveaux N1, N2, N3 respectivement pour les angles θ1, θ2, θ3. Il en résulte que, pour une même forme de signaux K_{Σ} et K_{Δ} , comme cela a été supposé sur le diagramme du haut de la figure 5, selon l'angle de pointage considéré il y aura plus ou moins de portions du signal K_{Σ} qui seront prises en compte comme porteuses d'information valable. Ainsi avec les niveaux N1, N2, N3 tels qu'indiqués sur la figure 5, le quatrième pic du signal K_{Σ} ne sera pris en compte que pour les angles de pointage θ1 et θ2 ; ceci est illustré par les trois diagrammes R du bas de la figure 5 qui représentent les informations considérées comme valables par le traitement RSLS : diagrammes R1, R2, R3 respectivement pour les angles de pointage θ1, θ2, θ3 selon la figure 2. Bien entendu l'axe des temps de chacun des diagrammes R1, R2, R3 correspond, dans une translation verticale, à l'axe des temps du diagramme sur lequel sont représentés les signaux K_{Σ} et K_{Δ} ; ceci permet, en particulier, de remarquer que, à la deuxième impulsion des diagrammes R1, R2 ne correspond pas d'impulsion dans le diagramme R3 car, à cet instant, les signaux K_{Σ} et K_{Δ} passent par des maximums dont la différence des niveaux est supérieure à N1 et à N2 mais inférieure à N3.

Le schéma d'un exemple de réalisation d'un circuit de suppression des lobes secondaires est donné sur la figure 6.

Après que des niveaux de comparaison tels que les niveaux N1, N2, N3 aient été déterminés pour différents angles de pointage, leurs valeurs sont stockées dans une mémoire 6.

Les signaux analogiques des voies Σ et Δ, fournis par le récepteur de l'ensemble interrogateur, sont convertis en numérique par des convertisseurs analogiques-numériques 1, 7. Les sorties de la mémoire 6 et du convertisseur 7 sont reliées respectivement aux deux entrées d'un additionneur 8 dont la sortie est reliée à la première entrée d'un circuit de comparaison 9. Le circuit de comparaison 9 reçoit sur sa seconde entrée le signal de sortie du convertisseur 1 et délivre sur sa sortie des impulsions obtenues par le traitement RSLS. Ainsi réalisé le circuit de suppression des lobes secondaires selon la figure 6 fonctionne par sélection dans la mémoire 6 du niveau de comparaison N correspondant à l'angle de pointage θ de l'antenne et par comparaison entre le niveau du signal sur la voie Σ avec la somme du niveau du signal sur la voie Δ et du niveau N sélectionné ; une impulsion R n'est fournie par le circuit de comparaison 9 que si la valeur du signal numérique sur son entrée reliée à l'additionneur 8 est inférieure à la valeur du signal numérique sur son autre entrée.

La présente invention n'est pas limitée aux exemples décrits. Ainsi, par exemple, les circuits de traitement des figures 4 et 6 peuvent être conçus avec des circuits de comparaison analogiques ; dans le cas de la figure 4 le circuit 5 recevra directement le signal de la voie Σ sur sa première entrée et recevra le signal du circuit à mémoire 4 via un convertisseur numérique-analogique ; dans le cas de la figure 6 le circuit 9 recevra directement le signal de la voie Σ et soit l'additionneur 8 sera suivi d'un convertisseur numérique-analogique, soit l'additionneur 8 sera un additionneur analogique, le convertisseur 7 sera remplacé par un court-circuit et un convertisseur numérique-analogique sera inséré entre la mémoire 6 et l'additionneur 8. De même dans le circuit de suppression des lobes secondaires la comparaison, au lieu de se faire par comparaison du signal de la voie Σ au signal de la voie Δ augmenté d'un niveau donné, peut se faire par comparaison du signal de la voie Δ au signal de la voie Σ diminué de ce même niveau donné.

Par ailleurs il est à noter qu'un ensemble interrogateur IFF selon l'invention peut être équipé soit d'un circuit de traitement de type GVT, soit d'un circuit de suppression des lobes secondaires, soit de ces deux circuits ; dans ce dernier cas une impulsion pourra être considérée comme représentative d'information à condition qu'elle apparaisse simultanément à la sortie de ces deux circuits et, dans le cas des figures 4 et 6, le convertisseur analogique-numérique 1 pourra être commun aux deux circuits, c'est pourquoi il porte la même référence sur les deux figures.

## Revendications

1. Ensemble interrogateur pour système d'identification par radiodétection avec, en réception, un dispositif (A) pour capter des ondes hertziennes, ce dispositif étant susceptible d'être pointé suivant divers angles et étant destiné à fournir un signal qui sera dit de voie Σ, un circuit de discrimination d'impulsions (1-5), du type à gain variable en fonction du temps, comportant des moyens de comparaison (5) ayant une première entrée couplée au dispositif, une deuxième entrée et une sortie, et un générateur de signaux (2-4) pour fournir un signal de référence, d'amplitude variable avec le temps, sur la deuxième entrée des moyens de comparaison, caractérisé en ce que le dispositif comporte une antenne à balayage électronique (A) et en ce que le générateur (2-4) comporte des moyens (4) de mise en mémoire de plusieurs courbes de variation du signal de référence en fonction du temps, afin que le générateur puisse fournir, comme signal de référence, un signal correspondant, au choix, à l'une de ces courbes et des moyens de sélection d'une des courbes en fonction de l'angle de pointage (θ) du dispositif.

2. Ensemble interrogateur pour système d'identification par radiodétection avec, en réception, un dispositif (A) pour capter des ondes hertziennes, ce dispositif étant susceptible d'être pointé suivant divers angles et étant destiné à fournir deux signaux distincts qui seront dits de voies Σ et voie Δ, et un circuit de suppression des lobes secondaires (1, 6-9) comportant un générateur de niveaux (6) pour fournir un signal de niveau donné et des moyens de comparaison (8, 9) pour recevoir les signaux de voie Σ et de voie Δ et le signal de niveau donné et délivrer un signal de sortie (R) si et seulement si l'amplitude du signal de la voie Σ est au moins égale à celle du signal de la voie Δ augmentée de l'amplitude du signal de niveau donné, caractérisé en ce que le dispositif comporte une antenne à balayage électronique (A), en ce que le générateur (6) comporte des moyens de mise en mémoire de plusieurs valeurs afin que le générateur puisse fournir, comme signal de niveau donné, un signal correspondant, au choix, à l'une de ces valeurs mises en mémoire et des moyens de sélection d'une des valeurs mises en mémoire en fonction de l'angle de pointage (θ) du dispositif.

3. Ensemble interrogateur pour système d'identification par radiodétection avec, en réception, un dispositif (A) pour capter des ondes hertziennes, ce dispositif étant susceptible d'être pointé suivant divers angles et étant destiné à fournir deux signaux distincts qui seront dits de voies Σ et voie Δ, un circuit de discrimination d'impulsions (1-5), du type à gain variable en fonction du temps, comportant des premiers moyens de comparaison (5) ayant une première entrée couplée au dispositif, une deuxième entrée et une sortie, et un premier générateur de signaux (2-4) pour fournir un signal de référence, d'amplitude variable avec le temps, sur la deuxième entrée des premiers moyens de comparaison et un circuit de suppression des lobes secondaires (1, 6-9) comportant un générateur de niveaux (6) pour fournir un signal de niveau donné et des seconds moyens de comparaison (8, 9) pour recevoir les signaux de voie Σ et de voie Δ et le signal de niveau donné et délivrer un signal de sortie (R) si et seulement si l'amplitude du signal de la voie Σ est au moins égale à celle du signal de la voie Δ augmentée de l'amplitude du signal de niveau donné, caractérisé en ce que le dispositif comporte une antenne à balayage électronique (A), en ce que le générateur de signaux (2-4) comporte des moyens (4) de mise en mémoire de plusieurs courbes de variation du signal de référence en fonction du temps, afin de pouvoir fournir, comme signal de référence, un signal correspondant, au choix, à l'une de ces courbes et des moyens (θ) de sélection d'une des courbes en fonction de l'angle de pointage du dispositif et en ce que le générateur de niveaux (6) comporte des moyens de mise en mémoire de plusieurs valeurs afin de pouvoir fournir, comme signal de niveau donné, un signal correspondant, au choix, à l'une de ces valeurs mises en mémoire et des moyens de sélection d'une des valeurs mises en mémoire en fonction de l'angle de pointage (θ) du dispositif.

## Patentansprüche

1. Abfrage-Einrichtung für ein Funk-Identifizierungssystem, bei dem empfangsseitig eine Vorrichtung (A) zum Empfang von Funkwellen, die gemäß verschiedenen Winkeln ausgerichtet werden kann und ein Signal liefern soll, das als Signal des Summenkanals Σ bezeichnet wird, und eine Schaltung zur Impulsdiskriminierung (1 bis 5) vom Typ eines zeitlich variablen Verstärkungsgrads vorgesehen sind, die Vergleichsmittel (5) mit einem ersten Eingang, der an die Vorrichtung gekoppelt ist, einem zweiten Eingang und einem Ausgang, und einen Signalgenerator (2 bis 4) aufweisen, um ein Bezugssignal einer zeitlich variablen Amplitude an den zweiten Eingang der Vergleichsmittel zu liefern, dadurch gekennzeichnet, daß die Vorrichtung eine Antenne (A) mit elektronischer Abtastung enthält und daß der Signalgenerator (2 bis 4) Mittel (4) zur Speicherung mehrerer Kurven der Veränderung des Bezugssignals abhängig von der Zeit, damit der Generator als Bezugssignal ein Signal liefern kann, das wahlweise einer dieser Kurven entspricht, und Auswahlmittel enthält, um eine der Kurven abhängig vom Richtwinkel (θ) der Vorrichtung auszuwählen.

2. Abfrage-Einrichtung für ein Funk-Identifizierungssystem, bei dem empfangsseitig eine Vorrichtung (A) zum Empfang von Funkwellen, die gemäß verschiedenen Winkeln ausgerichtet werden kann und zwei unterschiedliche Signale liefern soll, nämlich ein Signal des Summenkanals Σ und ein Signal des Differenzkanals Δ, und eine Schaltung (1, 6 bis 9) zur Unterdrückung der Sekundärkeulen vorgesehen sind, die einen Generator (6) für Signalpegel zur Lieferung eines Signals eines gegebenen Pegels sowie Vergleichsmittel (8, 9) zum Empfang der Signale des Summenkanals Σ und des Differenzkanals Δ sowie des Signals mit dem gegebenen Pegel aufweist und die eine Ausgangssignal (R) dann und nur dann liefert, wenn die Amplitude des Signals auf dem Summenkanal Σ mindestens der des Signals auf dem Differenzkanal Δ, vergrößert um die Amplitude des Signals mit gegebenem Pegel, gleicht, dadurch gekennzeichnet, daß die Vorrichtung eine Antenne (A) mit elektronischer Abtastung besitzt und daß der Pegelgenerator (6) Mittel zur Speicherung mehrerer Pegelwerte, damit der Generator als Signal eines gegebenen Pegels ein Signal liefern kann, das wahlweise einem der gespeicherten Werte entspricht, und Mittel zur Auswahl eines der gespeicherten Werte abhängig vom Richtwinkel der Vorrichtung enthält.

3. Abfrage-Einrichtung für ein Funk-Identifizierungssystem, bei dem empfangsseitig eine Vorrichtung (A) zum Empfang von Funkwellen, die gemäß verschiedenen Winkeln ausgerichtet werden kann und zwei unterschiedliche Signale liefern soll, nämlich ein Signal des Summenkanals Σ und ein Signal des Differenzkanals Δ, eine Schaltung (1 bis 5) zur Impulsdiskriminierung vom Typ mit zeitlich variablem Verstärkungsgrad, die erste Vergleichsmittel mit einem ersten Eingang, der an die Vorrichtung gekoppelt ist, einem zweiten Eingang und einem Ausgang, und einen ersten Signalgenerator (2 bis 4) enthält, um ein Bezugssignal einer zeitlich variablen Amplitude an den zweiten Eingang der ersten Vergleichsmittel zu liefern, und eine Schaltung zur Unterdrückung der Sekundärkeulen (1, 6 bis 9) vorgesehen sind, die einen Pegelgenerator (6) zur Lieferung eines Signals eines gegebenen Pegels sowie zweite Vergleichsmittel (8, 9) zum Empfang der Signale des Summenkanals Σ und des Differenzkanals Δ und des Signals gegebenen Pegels sowie zur Lieferung eines Ausgangssignals (R) dann und nur dann aufweist, wenn die Amplitude des Signals auf dem Summenkanal Σ mindestens der des Signals auf dem Differenzkanal Δ, erhöht um die Amplitude des Signals mit gegebenen Pegel gleicht, dadurch gekennzeichnet, daß die Vorrichtung eine Antenne (A) mit elektronischer Abtastung enthält, daß der Signalgenerator (2 bis 4) Mittel (4) zur Speicherung mehrerer Kurven der Variation des Bezugssignals abhängig von der Zeit, um als Bezugssignal ein Signal liefern zu können, das wahlweise einer dieser Kurven entspricht, und Mittel zur Auswahl einer dieser Kurven abhängig vom Richtwinkel (θ) der Vorrichtung enthält, und daß der Pegelgenerator (6) Mittel zur Speicherung mehrerer Werte, die als Signal mit gegebenem Pegel ein Signal liefern können, das wahlweise einem der eingespeicherten Werte entspricht, sowie Mittel zur Auswahl eines der gespeicherten Werte abhängig vom Richtwinkel (θ) der Vorrichtung enthält.

## Claims

1. Interrogator assembly for a system of identification by radio-detection with, at reception, a device (A) to pick up radiofrequency waves, this device being capable of being trained at different angles and being designed to give a signal which shall be called Σ channel signal, a pulse discrimination circuit (1-5), of the variable gain versus time type, comprising comparison means (5) having a first input coupled to the device, a second input and an output, and a generator of signals (2-4) to give a reference signal, of time-variable amplitude, to the second input of the comparison means, characterized in that the device comprises an electronic scanning antenna (A) and in that the generator (2-4) comprises means (4) for the memorizing of several curves of variation of the reference signal as a function of time, so that the generator can give, as the reference signal, a signal corresponding, by choice, to one of these curves and means of selection of one of the curves as a function of the training angle (θ) of the device.

2. Interrogator assembly for a system of identification by radio-detection with, at reception, a device (A) to pick up radiofrequency waves, this device being capable of being trained at different angles and being designed to give two distinct signals which shall be called Σ channel and Δ channel signals, and a side lobe suppression circuit (1, 6-9) comprising a level generator (6) to give a signal of a given level and means of comparison (8, 9) to receive the Σ channel and A channel signals and the signal of given level and to deliver an output signal (R) if and only if the amplitude of the signal of the Σ channel is at least equal to that of the signal of the Δ channel increased by the amplitude of the signal of given level, characterized in that the device comprises an electronic scanning antenna (A), in that the generator (6) comprises means for the memorizing of several values so that the generator can give, as the signal of given level, a signal corresponding, by choice, to one of the values which have been memorized, and means for the selection of one of the values which have been memorized as a function of the training angle (θ) of the device.

3. Interrogator assembly for a system of identification by radio-detection with, at reception, a device (A) to pick up radiofrequency waves, this device being capable of being trained at different angles and being designed to give two distinct signals which shall be called Σ channel and Δ channel signals, a pulse discrimination circuit (1-5), of the variable gain versus time type, comprising first comparison means (5) having a first input coupled to the device, a second input and an output, and a first generator of signals (2-4) to give a reference signal, whose amplitude is variable with time, to the second input of the first comparison means and a side lobe suppression circuit (1, 6-9) comprising a level generator (6) to give a signal of given level and second comparison means (8, 9) to receive the Σ channel and Δ channel signals and the signal of given level and to deliver an output signal (R) if and only if the amplitude of the signal of the Σ channel is at least equal to that of the signal of the Δ channel increased by the amplitude of given level, characterized in that the device comprises an electronic scanning antenna (A), in that the generator of signals (2-4) comprises means (4) for the memorizing of several curves of variation of the reference signal as a function of time, so as to be capable of giving, as the reference signal, a signal corresponding, by choice, to one of these curves and means (θ) for the selection of one of the curves as a function of the training angle of the device and in that the level generator (6) comprises means for the memorizing of several values so as to be capable of giving, as the signal of given level, a signal corresponding, by choice, to one of these values which have been memorized, and means for the selection of one of the values which have been memorized as a function of the training angle (θ) of the device.
